# EUROPÄISCHE PATENTSCHRIFT

(11) **EP 2 041 531 B1**
(45) Veröffentlichungstag und Bekanntmachung des Hinweises auf die Patenterteilung: **30.12.2015**
(21) Anmeldenummer: 07725689.9
(22) Anmeldetag: 31.05.2007
(51) Int. Cl.: G01G 3/14, G01G 23/37

(54) **OBERSCHALIGE WAAGE MIT ECKLASTSENSOR**
TOP-PAN SCALES WITH CORNER LOAD SENSOR
BALANCE À PLATEAU SUPÉRIEUR AVEC CAPTEUR DE PRESSION D'ANGLE

(30) Priorität: 11.07.2006 DE 102006031950
(43) Veröffentlichungstag der Anmeldung: 01.04.2009
(73) Patentinhaber: Sartorius Lab Instruments GmbH & Co. KG, 37075 Göttingen (DE)
(72) Erfinder: MÜLLER, Michael, 37079 Göttingen (DE); SCHULZE, Werner, 37083 Göttingen (DE)
(86) Internationale Anmeldenummer: PCT/EP2007/004801
(87) Internationale Veröffentlichungsnummer: WO 2008/006423

(56) Entgegenhaltungen:
- DE-A1- 3 811 942
- DE-U1- 29 601 431
- DE-U1- 29 918 562

## Beschreibung

Die Erfindung bezieht sich auf eine oberschalige Waage mit einer Waagschale, die sich auf mindestens einem Kraftaufnehmer eines Kraftmesssystems abstützt, und mit einem Ecklastsensor, der bei außermittiger Lage des Wägegutes auf der Waagschale ein Signal abgibt.

Waagen dieser Art sind z. B. in der DE 30 03 862 C2 oder der DE 38 11 942 C2 beschrieben.

Nachteilig an diesen bekannten Waagen ist, dass der Ecklastsensor in den Kraftaufnehmer oder in eine Unterschale integriert ist. Dadurch ist für jeden Waagentyp eine individuelle Auslegung des Ecklastsensors notwendig und eine Nachrüstung vorhandener Waagen ist gar nicht oder nur unter sehr großem Aufwand möglich.

Die Nachrüstung einer Waage mit einem Ecklastsensor hat sich auch schon die DE 299 18 562 U1 zum Ziel gesetzt. Dort sind an der Waagschale mindestens zwei untereinander und von der Mitte der Waagschale beabstandete Kraftmesssensoren sowie Mittel zum Verschieben des Schwerpunktes von Wägegut und Waagschale vorgesehen. Dieses Verschieben des Wägegutes erfordert jedoch entweder eine Mithilfe der Bedienungsperson oder eine komplizierte und störanfällige Mechanik (besonders bei hohen Lasten) und verlängert die Messzeit. Außerdem ist in der DE 299 18 562 U1 über die konkrete Gestaltung der Ecklastsensoren nur ausgesagt, dass sie z. B. die elastische Verformung der Waagschale oder die elastische Verformung der Unterschale, z. B. mit Dehnungsmessstreifen (DMS), messen. Durch die Benutzung der Waagschale oder der Unterschale als elastisches Element des Ecklastsensors wird der Ecklastsensor wieder von der Bauform der Waagschale bzw. Unterschale abhängig, so dass das Ziel der Nachrüstbarkeit nur sehr eingeschränkt erreicht wird.

Aufgabe der Erfindung ist es, für eine Waage der eingangs genannten Art einen Ecklastsensor anzugeben, der leicht nachrüstbar ist.

Erfindungsgemäß wird dies dadurch erreicht, dass der Ecklastsensor eine ebene Unterseite aufweist, mit der er auf der Waagschale oder einer Unterschale der Waage aufsetzbar oder befestigbar ist, dass der Ecklastsensor eine ebene Oberseite aufweist, auf die eine Waagschale aufsetzbar oder befestigbar ist, und dass der Ecklastsensor über eine kraftrückwirkungsfreie Verbindung mit einer ortsfesten Korrekturelektronik verbunden ist.

Durch die angegebene geometrische Gestaltung mit ebener Unter- und Oberseite kann der Ecklastsensor z. B. direkt auf eine vorhandene Waagschale aufgesetzt werden und auf die Oberseite kann eine weitere, neue Waagschale aufgelegt werden. Oder bei einer Waage mit Waagschale und Unterschale kann der Ecklastsensor direkt auf die Unterschale aufgesetzt werden und die vorhandene Waagschale kann direkt auf die ebene Oberseite des Ecklastsensors aufgelegt werden. Eine feste Verbindung ist dabei vorteilhaft, aber nicht zwingend notwendig. - Eine Veränderung der Lage des Wägegutes - wie sie in der DE 299 18 562 U1 vorgesehen ist - erfolgt nicht, vielmehr wird das Ausgangssignal des Ecklastsensors einer Korrekturelektronik zugeführt und dort der Ecklastfehler rechnerisch korrigiert - wie es auch schon in der DE 30 03 862 C2 und der DE 38 11 942 C2 vorgesehen ist. Die Signalübertragung erfolgt dabei kraftrückwirkungsfrei - z. B. über eine Funkverbindung oder eine optische Verbindung. Das Signal des Ecklastsensors wird dabei zweckmäßigerweise vor der Übertragung digitalisiert, um eine große Störsicherheit zu erzielen. Die rechnerische Ecklastkorrektur erfolgt dann durch eine externe Korrekturelektronik, vorteilhafterweise z. B. durch einen PC, der das Wägesignal der Waage über den standardmäßigen Datenausgang und das Ecklastsignal vom Ecklastsensor erhält. Dadurch ist keinerlei Eingriff in die Waagenelektronik notwendig.

Der Ecklastsensor hat in einer vorteilhaften Ausgestaltung die Form eines vertikal angeordneten kurzen Rohres, dass an beiden Enden Endflansche trägt. Die Endflansche ergeben dabei die ebene Unter- bzw. Oberseite und das dazwischen angeordnete Rohrstück erlaubt die Applikation von DMS.

Die Erfindung wird im folgenden anhand der schematischen Figuren beschrieben. Dabei zeigt:
- Figur 1: eine Übersicht über die Waage, den Ecklastsensor und die Korrekturelektronik,
- Figur 2: den Ecklastsensor in einer beispielhaften Ausgestaltung vergrößert im Schnitt,
- Figur 3: den Ecklastsensor gemäß Figur 2 in einer Unteransicht,
- Figur 4: den Ecklastsensor in einer zweiten Ausgestaltung im Schnitt und
- Figur 5: den Ecklastsensor in einer dritten Ausgestaltung im Schnitt.

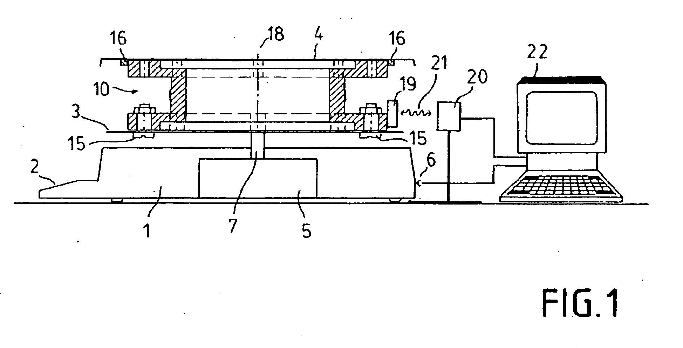

In Figur 1 erkennt man eine übliche Waage 1, mit einer Anzeige 2, mit einer Unterschale 3, die über einen Kraftaufnehmer 7 mit einem Kraftmesssystem 5 verbunden ist, mit einer Waagschale 4 und mit einem Datenausgang 6. Diese Teile der Waage sind allgemein bekannt und müssen daher nicht im Detail erläutert werden; insbesondere kann das Kraftmesssystem 5 nach einem beliebigen Prinzip arbeiten, z. B. mittels der elektromagnetischen Kraftkompensation oder mittels eines Federkörpers mit DMS.

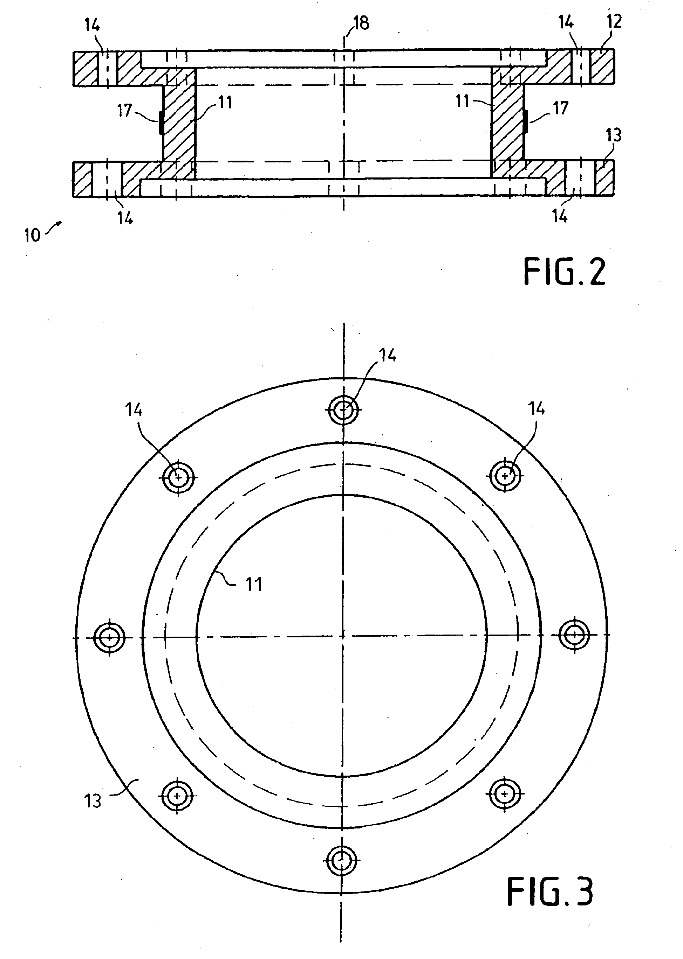

Die Waageschale 4 liegt nun bei der erfindungsgemäßen Waage nicht direkt auf der Unterschale 3 auf, vielmehr liegt auf der Unterschale 3 ein Ecklastsensor 10 auf und erst auf diesem Ecklastsensor 10 liegt die Waagschale 4 auf. Der Ecklastsensor 10 ist in Figur 2 noch einmal vergrößert im Schnitt und in Figur 3 in der Unteransicht gezeigt. Der Ecklastsensor 10 besteht aus einem kurzen Rohr 11, sowie einem oberen Flansch 12 und einem unteren Flansch 13. Die Flansche 12 und 13 weisen Bohrungen 14 auf, mit denen der Ecklastsensor an der Unterschale bzw. an der Waagschale befestigt werden kann. Besonders die Verbindung zwischen Unterschale und Ecklastsensor ist für die reproduzierbare Bestimmung der Lage des Schwerpunktes des Wägegutes wichtig. In Figur 1 sind deshalb Befestigungsschrauben 15 angedeutet, die eine feste Verbindung zwischen Ecklastsensor und Unterschale gewährleisten. Demgegenüber ist die Verbindung zwischen Waagschale 4 und Ecklastsensor 10 messtechnisch unkritischer, hier reicht in manchen Fällen eine formschlüssige Fixierung 16. Trotzdem weist auch der obere Flansch 12 Bohrungen 14 auf, um eine feste Verbindung zwischen Waagschale und Ecklastsensor zu ermöglichen.

Der Ecklastsensor 10 weist auf seinem rohrförmigen Teil (Rohr) 11 vorzugsweise vier DMS 17 auf, die die senkrechte Stauchung der Rohrwandung unter dem Einfluss eines Wägegutes detektieren. Dazu sind die zwei in Figur 2 erkennbaren DMS zusammen mit zwei Festwiderständen in bekannter Weise zu einer Wheatstoneschen Brücke verschaltet. Liegt das Wägegut genau in der strichpunktierten Symmetrielinie 18 und damit genau über dem Kraftaufnehmer 7, so werden die beiden DMS 17 gleich gestaucht und es ergibt sich in der Brückenschaltung keine Diagonalspannung und damit kein Ausgangssignal. Liegt das Wägegut dagegen z. B. etwas nach rechts versetzt, so wird der rechte DMS etwas stärker gestaucht als der linke DMS, ändert seinen Widerstand also stärker, so dass sich eine Diagonalspannung als Ausgangssignal des Ecklastsensors ergibt. - Die beiden anderen DMS sind vor und hinter der Zeichenebene der Figur 2 auf dem Rohr 11 appliziert und geben bei Außermittigkeit des Wägegutes in Richtung senkrecht zur Zeichenebene der Figur 2 in entsprechender Weise ein Ecklastsignal ab. - Selbstverständlich ist es auch möglich, für jede Messrichtung vier DMS auf dem Rohr zu applizieren und damit die Festwiderstände in der Wheatstoneschen Brücke durch DMS zu ersetzten. Das Ausgangssignal verdoppelt sich dadurch.

Die beiden Ecklastsignale werden in einer Elektronik 19 gegebenenfalls verstärkt und digitalisiert, damit sie über eine drahtlose Verbindung 21 zu einer Sende- und Empfangseinheit 20 übertragen werden können. Drahtlose Funkverbindungen (z. B. Bluetooth) und drahtlose optische Verbindungen sind allgemein bekannt, so dass die Details der Datenübertragung nicht erläutert werden müssen. Genauso ist es bekannt, diese Datenverbindung so auszugestalten, dass die (geringe) Energie, die zum Betrieb der Elektronik 19 notwendig ist, ebenfalls mit übertragen wird. Durch die drahtlose Daten- und Energieübertragung wird eine kraftrückwirkungsfreie Verbindung hergestellt und gleichzeitig werden alle Probleme durch Batterien oder dergleichen am Ecklastsensor vermieden.

Die Sende- und Empfangseinheit 20 gibt die digitalen Ecklastsignale an eine Korrekturelektronik 22 weiter, die in Fig. 1 durch einen PC realisiert ist. Der PC erhält außerdem vom normalen digitalen Datenausgang 6 der Waage das von der Waage ermittelte Wägesignal und kann dann die Ecklastkorrektur ausrechnen (siehe folgenden Absatz) und das korrigierte Wägesignal anzeigen / ausgeben. (Die normale Anzeige 2 der Waage wird also nicht benutzt.)

Bei der ersten Inbetriebnahme des beschriebenen Ecklastsensors zusammen mit einer bestimmten Waage wird zuerst ein beliebiges Wägegut mittig auf die Waagschale und damit fluchtend zum Kraftaufnehmer 7 aufgelegt und die Waagenanzeige bestimmt. Anschließend wird das Wägegut z. B. nach rechts (in der Darstellung von Figur 1) verschoben und das Signal des Ecklastsensors und die Änderung der Waagenanzeige notiert / gespeichert. Anschließend wird das Wägegut nach links verschoben und ebenfalls das Signal des Ecklastsensors und die Änderung der Waagenanzeige notiert / gespeichert. Gegebenenfalls kann dieselbe Prozedur für verschieden außermittige Lagen des Wägegutes wiederholt werden. Aus der z. B. grafischen Darstellung der Änderung der Waagenanzeige in Abhängigkeit vom Signal des Ecklastsensors kann die Korrekturfunktion errechnet werden, die ein von der Lage des Wägegutes unabhängiges Wägeergebnis liefert. Diese Korrekturfunktion wird in der Korrekturelektronik 22 gespeichert und bei den späteren Messungen zur Korrektur benutzt. - Es wird ausdrücklich darauf hingewiesen, dass bei Waagen die Abhängigkeit der Ergebnisanzeige vom Ort des Wägegutes auf der Waagschale gering ist. Daher wird man die eben beschriebene Änderung der Waagenanzeige in Abhängigkeit vom Ort des Wägegutes auf der Waagschale nur bei sehr hochauflösenden Waagen - beispielsweise auch bei sogenannten Komparatorwaagen - feststellen können; außerdem handelt es sich bei den Änderungen immer um kleine Werte. Daher wird im Allgemeinen eine Geradengleichung für die Korrektur des Wägeergebnisses ausreichen. Durch die Benutzung eines PCs als Korrekturelektronik ist es aber bei Bedarf möglich, auch nichtlineare Abhängigkeiten zu korrigieren oder auch belastungsabhängige Ecklastabhängigkeiten zu korrigieren. - Das im Vorstehenden für die Richtung rechts/links Beschriebene wird in gleicher Weise für die dazu senkrechte Richtung wiederholt und auch für diese Richtung eine Ecklastkorrekturfunktion bzw. ein Ecklastkorrekturfaktor ermittelt und abgespeichert. Da die Ecklastkorrektur im Allgemeinen nur um wenige Digit erfolgt, sind natürlich auch die Anforderungen an die Auflösung und die Reproduzierbarkeit des Ecklastsensor-Signals gering.

Durch die beschriebene Geometrie des Ecklastsensors mit ebener Unter- und Oberseite ist bei Waagen mit ebener Waagschale bzw. mit ebener Unterschale eine sehr leichte Nachrüstbarkeit gewährleistet. Aber auch bei anders geformten Waagschalen bzw. Unterschalen ist die Herstellung eines spezifischen Adapterteiles einfacher , wenn man von einer ebenen Begrenzungsfläche ausgehen kann. Unter einer ebenen Unterseite bzw. einer ebenen Oberseite soll selbstverständlich auch eine solche Geometrie verstanden werden, bei der z. B. auf der Unterseite des Ecklastsensors um jede Befestigungsbohrung 14 herum ein Wulst geringer Dicke vorhanden ist (nicht gezeichnet) und die Wulste zusammen wieder eine Ebene definieren; oder wenn auf der Oberseite in den oberen Bohrungen 14 jeweils Gummipuffer stecken, auf denen die Waagschale aufgelegt werden kann.

Durch die beschriebene externe Auswertung der Ecklastsignale und durch die externe Korrektur ist weder ein Eingriff in die Mechanik noch ein Eingriff in die Elektronik der vorhandenen Waage notwendig, so dass auch dadurch die Nachrüstbarkeit vereinfacht wird.

Im beschriebenen Beispiel ist eine Schraubverbindung zwischen dem Ecklastsensor und der Unterschale vorgesehen. Selbstverständlich sind auch beliebige andere Verbindungstechniken, wie z. B. Nieten oder Kleben möglich. Vielfach reicht auch eine formschlüssige Fixierung, wobei durch eine Kerbe oder dergleichen eine Verdrehung des Ecklastsensors verhindert werden muss.

Im gezeichneten Beispiel von Figur 1 wird die Unterschale 3 durch einen Kraftaufnehmer eines Kraftmesssystems gestützt. Selbstverständlich ist der erfindungsgemäße Ecklastsensor auch bei Waagen einsetzbar, bei denen die Unterschale oder die Waagschale durch drei oder vier Kraftaufnehmer mit einem Kraftmesssystem oder mit drei oder vier Kraftmesssystemen verbunden ist. Die zweckmäßige Lage des Ecklastsensors 10 ist in diesem Fall so, dass die Symmetrielinie 18 etwa in der Mitte zwischen den einzelnen Kraftaufnehmern angeordnet ist. Die genaue Lage der Symmetrielinie 18 ist für die Messgenauigkeit jedoch unkritisch, da durch die beschriebene Kalibrierung bei der Inbetriebnahme des Ecklastsensors die genaue Lage mit einkalibriert wird.

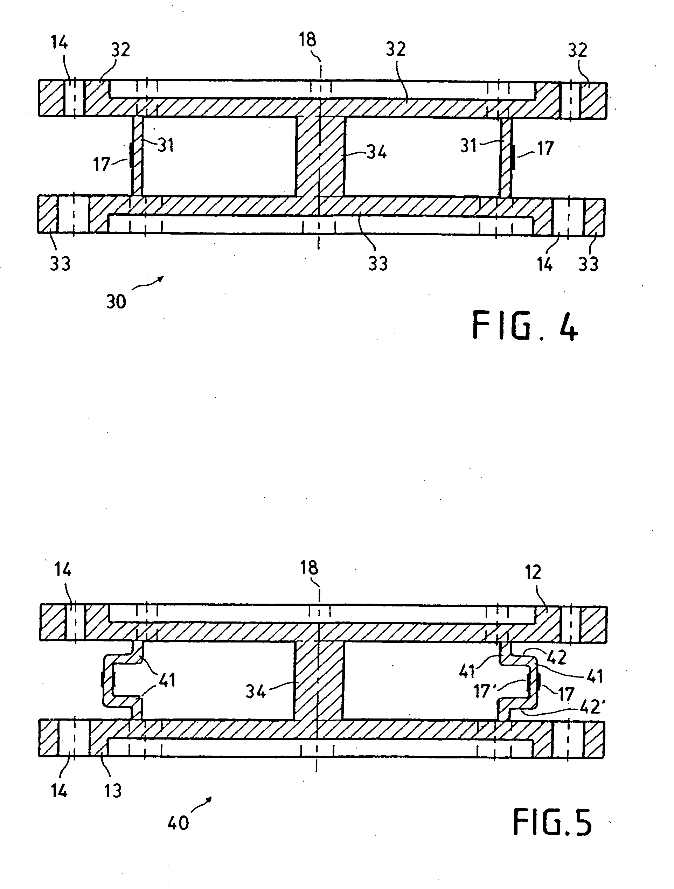

In Figur 4 ist eine zweite Ausgestaltung des Ecklastsensors im Schnitt gezeigt. Dieser Ecklastsensor 30 besteht wieder aus einem Rohr 31 mit Flanschen 32 und 33. Die Flansche 32 und 33 sind in dieser Ausgestaltung scheibenförmig ausgebildet. In der Symmetrieachse 18 des Rohres 31 verbindet ein Tragstab 34 den oberen und den unteren Endflansch. Die Wandung des Rohres 31 ist relativ dünn, so dass die Gewichtskraft des Wägegutes bei mittiger Lage zum großen Teil durch den Tragstab 34 aufgenommen wird. Bei außermittiger Lage des Wägegutes wird dagegen das Ecklast-Drehmoment vorrangig vom Rohr 31 mit den DMS 17 aufgenommen, da der Tragstab 34 gegenüber Biegung relativ weich ist. - Bei gleichem Gesamtquerschnitt von Tragstab 34 und Rohr 31 verglichen mit dem Querschnitt des Rohres 11 allein in der Ausgestaltung gemäß Figur 2 und 3 ist dann das Grundsignal bei mittigem Wägegut bei beiden Ausgestaltungen gleich. Bei außermittiger Lage des Wägegutes ist jedoch das Signal der DMS auf dem Rohr 31 deutlich größer als das Signal der DMS auf dem Rohr 11, da die Wanddicke des Rohres 31 deutlich geringer ist als die Wanddicke des Rohres 11.

Die Herstellung des Ecklastsensors in Figur 4 ist z. B. so möglich, dass der Tragstab 34, das Rohr 31 und der eine Flansch einstückig hergestellt werden, dass der andere Flansch mit einer Bohrung in der Mitte für den Tragstab hergestellt wird und dass die beiden Teile anschließend, z. B. durch Schweißen, miteinander verbunden werden. Auch eine Herstellung aus einem Stück ist möglich, wenn das Rohr 31 über den Umfang verteilt mehrere (z. B. acht) Löcher aufweist, durch die eine Bearbeitung des Hohlraumes mittels Fräser möglich ist.

Figur 5 zeigt eine dritte Ausgestaltung des Ecklastsensors im Schnitt. Gleiche Teile wie in Figur 4 sind mit den gleichen Bezugzahlen bezeichnet und werden nicht noch einmal erläutert. Das Rohr 41 hat in dieser Ausgestaltung die Form eines Wellmembran-Rohres, dadurch ist die Steifigkeit dieses Rohres gegenüber vertikalen Kräften noch geringer und damit die Empfindlichkeit gegenüber Ecklast-Drehmomenten noch größer. Außerdem können auf der Innenseite des Rohres 41 zusätzliche DMS 17' appliziert werden, wobei die DMS 17' bei Belastung gestaucht werden, während die DMS 17 auf der Außenseite des Rohres 41 in dieser Ausgestaltung unter Belastung gedehnt werden. Dadurch lässt sich eine vollständige Wheatstoneschen Brücke mit gedehnten und gestauchten DMS aufbauen und dadurch ergibt sich ebenfalls ein größeres elektrisches Ausgangssignal des Ecklastsensors 40.
Selbstverständlich können in Figur 5 die DMS auch an den waagerechten Bereichen 42 und / oder 42' des Rohres 41 appliziert werden. Auch in diesen waagerechten Bereichen entstehen gestauchte und gedehnte Zonen, so dass mit DMS Signale beider Vorzeichen erzielt werden können. Das schwierige Applizieren an der Innenseite des Rohres 41 in Figur 5 entfällt dadurch.

Die wellrohrartige Ausgestaltung gemäß Figur 5 ist selbstverständlich auch in der Ausgestaltung ohne Tragstab möglich. Diese sehr weiche und empfindliche Ausführung ist dann besonders für niedrige Lasten geeignet. Die Empfindlichkeit des Ecklastsensors in den Ausgestaltungen mit Tragstab lässt sich weiterhin dadurch erhöhen, dass am Tragstab durch Einschnürungen Bereiche mit geringerem Querschnitt erzeugt werden (nicht gezeichnet). Diese kurzen Bereiche mit geringerem Querschnitt beeinflussen die Nachgiebigkeit gegenüber vertikalen Kräften nur wenig, die Biegesteifigkeit jedoch stark.

Im Vorstehenden ist immer davon ausgegangen worden, dass der Ecklastsensor zur rechnerischen Korrektur der Ecklast einer Waage benutzt wird. Es ist jedoch selbstverständlich auch möglich, das Signal des Ecklastsensors zur Bestimmung des Schwerpunktes des Wägegutes zu benutzen: Ist das Ausgangssignal des Ecklastsensors null, so liegt der Schwerpunkt des Wägegutes genau in der Symmetrielinie 18 des Ecklastsensors; aus der Größe des Ausgangssignals des Ecklastsensor lässt sich bei bekanntem Gewicht des Wägegutes die seitliche Abweichung des Schwerpunktes bestimmen.

Der Ecklastsensor kann weiterhin auch die Herstellung von Waagen erleichtern: Statt die Waage auf eine 100%ige Ecklastfreiheit zu justieren, kann es preiswerter sein, die Waage während des Herstellprozesses nur grob zu justieren und die Ecklastfreiheit durch den Ecklastsensor und die Korrekturelektronik zu erzielen. Im Rahmen einer Fertigung nach dem Baukastenprinzip können dann z. B. Waagen mit mittlerer Auflösung ecklastjustiert hergestellt und direkt verkauft werden; Waagen mit hoher Auflösung werden dann einfach durch zusätzlichen Einbau des Ecklastsensors und der Korrekturelektronik aus diesen Grundgeräten hergestellt.

Für die kraftrückwirkungsfreie Verbindung des Ecklastsensors mit der Korrekturelektronik sind im Vorstehenden eine Funkverbindung und eine optische Verbindung beschrieben. Selbstverständlich sind auch drahtgebundene Verbindungen möglich, die praktisch kraftrückwirkungsfrei sind. Goldbandverbindungen z. B. werden für diesen Zweck häufig eingesetzt. Bei richtiger Auslegung sind diese Verbindungen ebenfalls kraftrückwirkungsfrei in dem Sinne, dass die Kräfte der Goldbänder geringer sind als die Auflösung der Waage, sie also die Genauigkeit der Waage nicht beeinträchtigen.

### Bezugszeichenliste:

- 1: Waage
- 2: Anzeige
- 3: Unterschale
- 4: Waagschale
- 5: Kraftmesssystem
- 6: Datenausgang
- 7: Kraftaufnehmer
- 10: Ecklastsensor
- 11: Rohr
- 12: Flansch
- 13: Flansch
- 14: Bohrungen
- 15: Befestigungsschrauben
- 16: formschlüssige Fixierung
- 17,17': Dehnungsmessstreifen (DMS)
- 18: Symmetrielinie
- 19: Elektronik
- 20: Sende- und Empfangseinheit
- 21: kraftrückwirkungsfreie (z. B. drahtlose) Verbindung
- 22: Korrekturelektronik, z. B. PC
- 30: Ecklastsensor
- 31: Rohr
- 32: Flansch (scheibenförmig)
- 33: Flansch (scheibenförmig)
- 34: Tragstab
- 40: Ecklastsensor
- 41: Rohr
- 42, 42': waagerechte Bereiche

## Patentansprüche

1. Oberschalige Waage mit einer Waagschale, die sich auf mindestens einem Kraftaufnehmer (7) eines Kraftmesssystems (5) abstützt, und mit einem Ecklastsensor, der bei außermittiger Lage des Wägegutes auf der Waagschale ein Signal abgibt, wobei der Ecklastsensor (10,30,40) eine ebene Unterseite aufweist, mit der er auf der Waagschale oder einer Unterschale (3) der Waage aufsetzbar oder befestigbar ist, wobei der Ecklastsensor eine ebene Oberseite aufweist, auf die eine Waagschale (4) aufsetzbar oder befestigbar ist, **dadurch gekennzeichnet, dass** der Ecklastsensor (10,30,40) über eine kraftrückwirkungsfreie Verbindung (21) mit einer ortsfesten Korrekturelektronik (22) verbunden ist.

2. Oberschalige Waage nach Anspruch 1, **dadurch gekennzeichnet, dass** der Ecklastsensor (10,30,40) die Form eines vertikal angeordneten Rohres (11,31,41) mit beidseitigen Flanschen (12,13;32,33) hat.

3. Oberschalige Waage nach Anspruch 2, **dadurch gekennzeichnet, dass** die Endflansche (32,33) als Endscheiben ausgebildet sind und dass zwischen den beiden Endscheiben in der Symmetrieachse (18) des Rohres (31,41) ein Tragstab (34) angeordnet ist.

4. Oberschalige Waage nach Anspruch 2 oder 3, **dadurch gekennzeichnet, dass** der Durchmesser des Rohres (11,31,41) größer ist als die Höhe.

5. Oberschalige Waage nach einem der Ansprüche 2 bis 4, **dadurch gekennzeichnet, dass** mindestens ein Flansch (12,13;32,33) Befestigungsbohrungen aufweist.

6. Oberschalige Waage nach einem der Ansprüche 2 bis 5, **dadurch gekennzeichnet, dass** das Rohr (41) mindestens eine Ausbeulung wie bei einem Wellrohr aufweist.

7. Oberschalige Waage nach einem der Ansprüche 2 bis 6, **dadurch gekennzeichnet, dass** mindestens vier Dehnungsmessstreifen (17) mit vertikaler Messrichtung auf dem Rohr (11,31,41) appliziert sind.

8. Oberschalige Waage nach Anspruch 1, **dadurch gekennzeichnet, dass** die kraftrückwirkungsfreie Verbindung (21) durch eine Funkverbindung realisiert ist.

9. Oberschalige Waage nach Anspruch 8, **dadurch gekennzeichnet, dass** die Energieversorgung der Elektronik (19) des Ecklastsensors (10,30,40) ebenfalls über die Funkverbindung erfolgt.

10. Oberschalige Waage nach Anspruch 1, **dadurch gekennzeichnet, dass** die kraftrückwirkungsfreie Verbindung (21) durch eine optische Verbindung realisiert ist.

11. Oberschalige Waage nach Anspruch 10, **dadurch gekennzeichnet, dass** die Energieversorgung der Elektronik (19) des Ecklastsensors (10,30,40) ebenfalls über die optische Verbindung erfolgt.

12. Oberschalige Waage nach Anspruch 1, **dadurch gekennzeichnet, dass** am Ecklastsensor (10,30,40) ein A/D-Wandler befestigt ist.

13. Oberschalige Waage nach Anspruch 1, **dadurch gekennzeichnet, dass** die Korrekturelektronik (22) eine digitale Korrektur des Ausgangssignals der Waage durchführt und durch einen entsprechend programmierten PC realisiert ist.

## Claims

1. Upper pan weighing machine with a weighing pan, which is supported on at least one force pick-up (7) of a force measuring system (5), and with a corner load sensor which issues a signal in the case of an off-centre position on the weighing pan of the material to be weighed, wherein the corner load sensor (10, 30, 40) has a planar lower side, by which it can be placed or fastened on the weighing pan or a lower pan (3) of the weighing machine, and wherein the corner load sensor has a planar upper side on which a weighing pan (4) can be placed or fastened, **characterised in that** the corner load sensor (10, 30, 40) is connected with a stationary electronic correction system (22) by way of a connection (20) free of force reaction.

2. Upper pan weighing machine according to claim 1, **characterised in that** the corner load sensor (10, 30, 40) has the form of a vertically arranged tube (11, 31, 41) with flanges (12, 13; 32, 33) at both ends.

3. Upper pan weighing machine according to claim 2, **characterised in that** the end flanges (32, 33) are formed as end discs and that a support rod (34) is arranged between the two end discs in the axis (18) of symmetry of the tube (31, 41).

4. Upper pan weighing machine according to claim 2 or 3, **characterised in that** the diameter of the tube (11, 31, 41) is greater than the height.

5. Upper pan weighing machine according to any one of claims 2 to 4, **characterised in that** at least one flange (12, 13; 32, 33) has fastening bores.

6. Upper pan weighing machine according to any one of claims 2 to 5, **characterised in that** the tube (41) has at least one bulge as in a corrugated tube.

7. Upper pan weighing machine according to any one of claims 2 to 6, **characterised in that** at least four strain gauges (17) with vertical measuring direction are applied to the tube (11, 31, 41).

8. Upper pan weighing machine according to claim 1, **characterised in that** the connection (21) free of force reaction is realised by a radio connection.

9. Upper pan weighing machine according to claim 8, **characterised in that** the energy supply of the electronic system (19) of the corner load sensor (10, 30, 40) is similarly carried out by way of the radio connection.

10. Upper pan weighing machine according to claim 1, **characterised in that** the connection (21) free of reaction force is realised by an optical connection.

11. Upper pan weighing machine according to claim 10, **characterised in that** the energy supply of the electronic system (19) of the corner load sensor (10, 30, 40) is similarly carried out by way of the optical connection.

12. Upper pan weighing machine according to claim 1, **characterised in that** an analog-to-digital converter is attached to the corner load sensor (10, 30, 40).

13. Upper pan weighing machine according to claim 1, **characterised in that** the electronic correction system (22) performs a digital correction of the output signal of the weighing machine and is realised by an appropriately programmed personal computer.

## Revendications

1. Balance à plateau supérieur avec un plateau de balance qui s'appuie sur au moins un récepteur de force (7) d'un système de mesure de force (5), et avec un capteur de charge d'angle qui émet un signal en cas de position excentrée du produit à peser sur le plateau de balance, le capteur de charge d'angle (10, 30, 40) présentant un côté inférieur plan, avec lequel il peut être placé ou fixé sur le plateau de balance ou un plateau inférieur (3) de la balance, le capteur de charge d'angle présentant un côté supérieur plan, sur lequel un plateau de balance (4) peut être placé ou fixé, **caractérisée en ce que** le capteur de charge d'angle (10, 30, 40) est relié par une liaison (21) sans rétroaction de force à une électronique de correction fixe (22).

2. Balance à plateau supérieur selon la revendication 1, **caractérisée en ce que** le capteur de charge d'angle (10, 30, 40) présente la forme d'un tube agencé verticalement (11, 31, 41) avec des brides bilatérales (12, 13 ; 32, 33).

3. Balance à plateau supérieur selon la revendication 2, **caractérisée en ce que** les brides d'extrémité (32, 33) sont réalisées comme des disques d'extrémité et **en ce qu'**une barre porteuse (34) est agencée entre les deux disques d'extrémité dans l'axe de symétrie (18) du tube (31, 41).

4. Balance à plateau supérieur selon la revendication 2 ou 3, **caractérisée en ce que** le diamètre du tube (11, 31, 41) est plus grand que la hauteur.

5. Balance à plateau supérieur selon l'une quelconque des revendications 2 à 4, **caractérisée en ce qu'**au moins une bride (12, 13 ; 32, 33) présente des perçages de fixation.

6. Balance à plateau supérieur selon l'une quelconque des revendications 2 à 5, **caractérisée en ce que** le tube (41) présente au moins un renflement comme pour un tube ondulé.

7. Balance à plateau supérieur selon l'une quelconque des revendications 2 à 6, **caractérisée en ce qu'**au moins quatre jauges de contrainte (17) avec un sens de mesure vertical sont appliquées sur le tube (11, 31, 41).

8. Balance à plateau supérieur selon la revendication 1, **caractérisée en ce que** la liaison sans rétroaction de force (21) est réalisée par une liaison radio.

9. Balance à plateau supérieur selon la revendication 8, **caractérisée en ce que** l'alimentation en énergie de l'électronique (19) du capteur de charge d'angle (10, 30, 40) est aussi effectuée par la liaison radio.

10. Balance à plateau supérieur selon la revendication 1, **caractérisée en ce que** la liaison sans rétroaction de force (21) est réalisée par une liaison optique.

11. Balance à plateau supérieur selon la revendication 10, **caractérisée en ce que** l'alimentation en énergie de l'électronique (19) du capteur de charge d'angle (10, 30, 40) est aussi effectuée par la liaison optique.

12. Balance à plateau supérieur selon la revendication 1, **caractérisée en ce qu'**un convertisseur A/N est fixé sur le capteur de charge d'angle (10, 30, 40).

13. Balance à plateau supérieur selon la revendication 1, **caractérisée en ce que** l'électronique de correction (22) réalise une correction numérique du signal de sortie de la balance et est réalisée par un PC programmé en conséquence.
